# EUROPÄISCHE PATENTSCHRIFT

(11) **EP 4 074 561 B1**
(45) Veröffentlichungstag und Bekanntmachung des Hinweises auf die Patenterteilung: **25.09.2024**
(21) Anmeldenummer: 22161975.2
(22) Anmeldetag: 14.03.2022
(51) Int. Cl.: B60T 8/36

(54) **HALTERUNG FÜR EIN ESC-MODUL**
HOLDER FOR AN ESC MODULE
SUPPORT POUR UN MODULE ESC

(30) Priorität: 13.04.2021 DE 102021203611
(43) Veröffentlichungstag der Anmeldung: 19.10.2022
(73) Patentinhaber: Stellantis Auto SAS, 78300 Poissy (FR)
(72) Erfinder: MAJEWSKI, Ralf, 65428 Rüsselsheim am Main (DE); SCHUETZ, Oliver, 65428 Rüsselsheim am Main (DE)
(74) Vertreter: Spitzfaden, Ralf

(56) Entgegenhaltungen:
- DE-A1- 102006 059 923
- DE-A1- 19 963 757

## Beschreibung

Die vorliegende Erfindung betrifft ein Teilesatz bzw. eine Halterung für die Montage eines elektronischen oder mechatronischen Moduls wie etwa eines ESC- (Electronic Stability Control) -Moduls in einem Fahrzeug. Herkömmliche Befestigungen durch Schrauben sind zeitaufwendig sowohl beim Einbau des Moduls als auch wenn dieses, etwa zum Zugreifen auf dahinter verdeckte Komponenten im Motorraum des Fahrzeugs, ausgebaut werden muss. Die Erfindung betrifft ferner ein Fahrzeug mit einem solchen Teilesatz.

DE 10 2010 042 177 A1 offenbart eine Halterung für einen Drehratensensor zur Datenerfassung für ein elektronisches Stabilitätsprogramm. Die aus Kunststoff einstückig geformte Halterung hat die Gestalt eines Körbchens, das den Sensor formschlüssig aufnimmt. Von dem Körbchen abstehende Befestigungslaschen sind mit Öffnungen versehen, über die das Körbchen an einer fahrzeugfesten Unterlage verschraubt werden kann. Der Sensor ist seinerseits ebenfalls durch Schrauben im Körbchen gesichert.

Eine andere bekannte Halterung umfasst eine Grundplatte mit Aufnahmen für von einer Gehäuseunterseite des ESP-Moduls abstehende Vorsprünge und eine Sicherungsplatte, die eine Seitenwand des Gehäuses flankiert und an dieser durch eine Schraube befestigbar ist. Um die Schraube an der Sicherungsplatte und ein Schraubwerkzeug an der Sicherungsplatte positionieren zu können, muss ausreichend Freiraum an der Sicherheitsplatte vorhanden sein. Existiert dieser nicht, dann ist eine Montage des ESP-Moduls nicht möglich.

Aus dem Stand der Technik sind ferner die DE 10 2006 059923 A1 und die gattungsbildende DE 199 63 757 A1 bekannt.

Eine Aufgabe der Erfindung ist, eine schnelle und sichere Montage eines Gehäuses in einem Fahrzeug zu ermöglichen.

Die Aufgabe wird einer Ausgestaltung der Erfindung zufolge gelöst durch einen Teilesatz zur Befestigung eines Gehäuses in einem Fahrzeug, mit einer quer zu einer Einsteckrichtung orientierten Trägerplatte, die wenigstens eine Aufnahme aufweist, in die ein Vorsprung des Gehäuses entlang der Einsteckrichtung einsteckbar ist, und einer sich parallel zu der Einsteckrichtung erstreckenden Sicherungsplatte, die eine weitere Aufnahme für einen Vorsprung des Gehäuses aufweist, wobei die Aufnahme über einen Durchgang mit einem Rand der Sicherungsplatte verbunden ist. Indem nach dem Einstecken unterschiedlich orientierte Vorsprünge des Gehäuses in den Aufnahmen gehalten sind, ist das Gehäuse formschlüssig gesichert, ohne dass dazu ein Verschrauben nötig ist. Freiraum für die Handhabung einer Schraube wird nicht benötigt, so dass das Gehäuse auch unter beengten Platzverhältnissen schnell und einfach montierbar ist. Der Durchgang kann enger sein als die weitere Aufnahme, die der Vorsprung des Gehäuses nach Passieren des Durchgangs erreicht, so dass der Vorsprung in dem weiteren Durchgang verrasten und dadurch das Gehäuse in der montierten Stellung sichern kann.

Vorzugsweise umfass der Teilesatz einen Stecker, der auf den Rand der Sicherungsplatte aufsteckbar ist, um den Durchgang zu versperren und so ein Entweichen des Vorsprungs aus der weiteren Aufnahme zu verhindern.

Der Teilesatz enthält ferner wenigstens einen elastischer Puffer, der in jeder Aufnahme der Trägerplatte fixierbar ist und einen sich in der Einsteckrichtung erstreckenden Durchgang aufweist, um den wenigstens einen Vorsprung des Gehäuses aufzunehmen.

Der Puffer hat einen Abschnitt von kleinerem Durchmesser zwischen zwei Abschnitten von größerem Durchmesser und jede Aufnahme der Trägerplatte einen weiten Bereich, der bemessen ist, um beim Einstecken wenigstens einen der Abschnitte von größerem Durchmesser durchzulassen, und einen engen Bereich, in dem der Abschnitt von kleinerem Durchmesser in der Einsteckrichtung unbeweglich fixierbar ist.

Wenn die die Trägerplatte zwei Aufnahmen umfasst, sind deren enge Bereiche gegen ihre weiten Bereiche vorzugsweise in verschiedene Richtungen versetzt. Wenn die Puffer in den engen Bereichen durch in ihre Durchgänge eingreifende Vorsprünge des Gehäuses fixiert sind, können sie nicht in die weiten Bereiche zurückkehren und sind dadurch an der Trägerplatte unverlierbar gesichert. Sicherungsplatte und Trägerplatte sollten zu einer Halterung verbunden sein, um in einem einzigen Arbeitsgang im Fahrzeug montierbar zu sein. Insbesondere können beide einteilig, z.B. aus einem Blechzuschnitt, gefertigt und gegeneinander gebogen sein, um einen nichtverschwindenden Winkel zwischen Sicherungsplatte und Trägerplatte aufzuspannen.

Ebenen der Trägerplatte und Sicherungsplatte kreuzen einander entlang einer Schnittlinie. Die Trägerplatte kann ein quer zu der Schnittlinie langgestrecktes Versteifungsprofil aufweisen, um einer Durchbiegung der Trägerplatte entgegenzuwirken, wenn die Puffer des Moduls in die Aufnahme oder Aufnahmen der Trägerplatte eingedrückt werden.

Da die Trägerplatte dort am leichtesten biegsam ist, wo sie durch eine Aufnahme für einen Vorsprung des Gehäuses geschwächt ist, sollte das Versteifungsprofil sich an jeder Aufnahme der Trägerplatte vorbei erstrecken.

Wenigstens eine, vorzugsweise jede der einen der Puffer aufnehmenden Aufnahmen kann durch einen Randsteg begrenzt sein, um einem Einschneiden der Träger- oder Sicherungsplatte in den Puffer vorzubeugen.

Die Halterung sollte wenigstens teilweise, vorzugsweise zur Gänze, aus Stahlblech bestehen, um in einem Fahrzeug problemlos eingeschweißt werden zu können.

Gegenstand der Erfindung ist auch ein Fahrzeug mit einem durch eine Halterung nach einem der vorhergehenden Ansprüche befestigten Modul.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht der Halterung;
- Fig. 2: ein Modul zur Montage in der Halterung;
- Fig. 3: das an der Halterung montierte Modul; und
- Fig. 4: ein Detail der Halterung nach Abschluss der Montage.

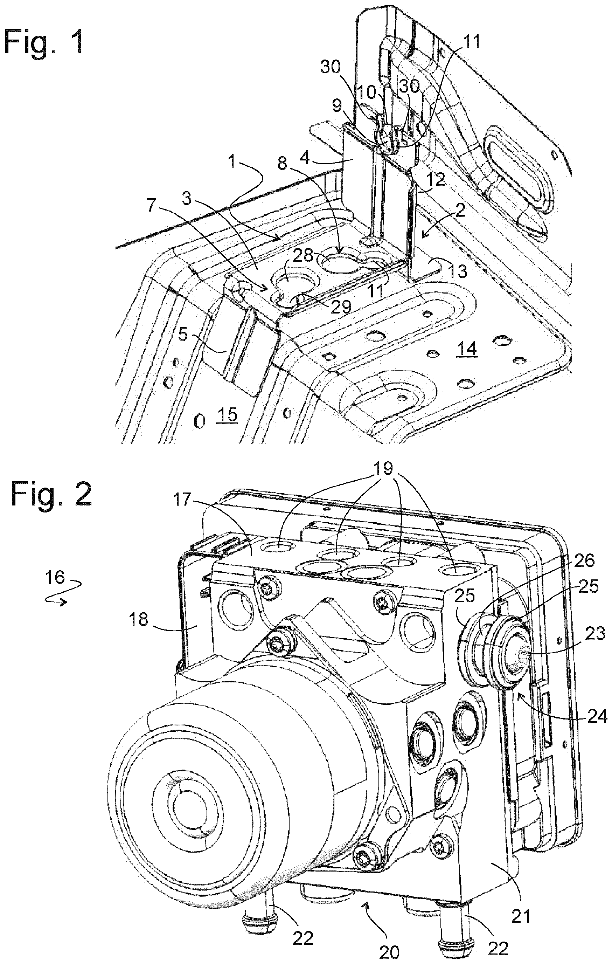

Fig. 1 zeigt eine erfindungsgemäße Halterung 1, zusammengesetzt aus zwei Zuschnitten aus Stahlblech. Ein zentraler Bereich eines ersten der beiden Zuschnitte bildet eine Trägerplatte 3. An den Längsenden der Trägerplatte 3 ist jeweils ein Teil des ersten Zuschnitts in entgegengesetzte Richtungen gebogen, um eine Sicherungsplatte 4 und, entgegengesetzt zu dieser, einen Stützfuß 5 zu bilden. Entlang eines Längsrandes der Trägerplatte 3 ist ein Steg abgewinkelt. Der Steg erstreckt sich vorbei an zwei Aufnahmen 7, 8 der Trägerplatte 3.

Die Aufnahmen 7, 8 sind in die Trägerplatte 3 gestanzte Öffnungen. Jede Öffnung umfasst einen weiten Bereich 28 und einen engen Bereich 29, hier in Form von zwei sich geringfügig überschneiden, so dass die Breite eines Durchgangs zwischen den Bereichen 28, 29 etwas kleiner ist als der Durchmesser des engen Bereichs 29.

Die Sicherungsplatte 4 weist eine weitere Aufnahme 9 an ihrem von der Trägerplatte 3 abgewandten Ende auf. Die Aufnahme 9 ist eine Öffnung, deren Durchmesser etwa dem des weiten Bereichs 28 entspricht, und die mit einem zum von der Trägerplatte 3 abgewandten Rand der Sicherungsplatte 4 hin über einen Durchgang 10 verbunden ist, der enger ist als die Aufnahme 9 selber.

Die Aufnahmen 7-9 sind jeweils von einem umlaufenden Randsteg 11 begrenzt.

Der zweite Zuschnitt ist zu einem Winkelstück 2 gebogen, von dem ein Schenkel 12 an der Sicherungsplatte 4 anliegend verschweißt ist und der andere eine zum Verschweißen an einer Unterlage im Fahrzeug vorgesehene Schweißlasche 13 bildet. Die Schweißlasche 13 und die Sicherungsplatte 4 erstrecken sich auf entgegengesetzten Seiten der Trägerplatte 3. Die Schweißlasche 13 liegt in einer Ebene, die im Wesentlichen parallel ist zu einer Ebene der Trägerplatte 3, so dass, wenn die Schweißlasche 13 auf einer ebenen Oberfläche 14 einer Unterlage befestigt ist, die Trägerplatte 3 sich in einem gleichbleibenden nichtverschwindenden Abstand von dieser erstreckt.

Der Stützfuß 5 reicht über die Ebene der Schweißlasche 13 hinaus und kann seinerseits an einer gegen die ebene Oberfläche abgewinkelten Flanke 15 der Unterlage verschweißt sein.

Fig. 2 zeigt ein ESC-Modul 16 von an sich bekannter Bauart. Das Modul 16 hat ein starres Gehäuse 17, dessen Gestalt im Wesentlichen durch Komponenten im Innern und zu deren Versorgung und Steuerung benötigte Anschlüsse wie etwa einen Steckverbinder 18 und Ein- und Auslässe 19 für Bremsflüssigkeit bestimmt ist. Für die vorliegende Erfindung sind allerdings nur einzelne Oberflächen 20, 21 eines quaderförmigen Abschnitts des Gehäuses 17 von Bedeutung, von denen Vorsprünge 22, 23 abstehen. An der nach unten gewandten Oberfläche 20 sind zwei Vorsprünge 22 vorgesehen, an der seitlichen Oberfläche 19 ein Vorsprung 23.

Die Vorsprünge 22, 23 sind untereinander identisch. Sie können durch in das Gehäuse 17 eingeschraubte Stifte gebildet sein. Der Vorsprung 23 ist von einem elastischen Puffer 24 umgeben; formgleiche Puffer können an den Vorsprüngen 22 angebracht werden. Verdickte Enden der Vorsprünge 22, 23 bewirken eine Verrastung der Puffer 24 an den Vorsprüngen 22, 23.

Die Puffer 24 sind Rotationskörper mit einer Längsachse, die auf der sie tragenden Oberfläche 20 bzw. 21 senkrecht steht. Sie umfassen jeweils zwei Kreisscheiben 25 von relativ großem Durchmesser, die voneinander in Richtung der Längsachse durch einen Abschnitt 26 von kleinerem Durchmesser und von der Oberfläche 20 bzw. 21 durch einen verdickten Abschnitt des sie tragenden Vorsprungs 22, 23 beabstandet sind.

Die weiten Bereiche 28 der Aufnahmen 7, 8 sind bemessen, um, wenn der Puffer 24 von oben gegen die Trägerplatte 3 gedrückt wird, eine äußere der beiden Kreisscheiben 25 in elastisch verformtem Zustand soeben durchzulassen und anschließend dem Abschnitt 26 Platz zu bieten. Die Höhe des Randstegs 11 ist an die Länge des Abschnitts 26 angepasst, so dass gleichzeitig die äußere Kreisscheibe 25 an der Unterkante des Randstegs 11 und die innere Kreisscheibe 25 an der Oberseite der Trägerplatte 3 anliegen kann. Der Durchgang zum engen Bereich 29 ist etwas schmaler als der Durchmesser des Abschnitts 26, so dass der Puffer 24 unter Überwindung eines Widerstandes in den engen Bereich 29 verschoben werden kann und darin formschlüssig fixiert ist. Wenn in Puffer 24 in beiden Aufnahmen 7, 8 in dieser Weise platziert sind, entspricht der Abstand zwischen ihren inneren Durchgängen dem der Vorsprünge 22, so dass diese von oben in die Durchgänge eingeschoben werden können, ohne dass dabei die Puffer 24 aus den Aufnahmen 7, 8 herausgedrückt werden.

Die Breite des Durchgangs 10 ist bemessen, um den Abschnitt 26 des auf den Vorsprung 23 aufgesteckten Puffers 24 von oben kommend durchzulassen und dabei quer zur Längsachse des Puffers 24 elastisch zu stauchen, so dass der Puffer 24 nach Passieren des Durchgangs 10 in der Öffnung 9 verrastet. Das Modul 16 kann somit ohne Werkzeug, durch einfaches Einrasten seiner Puffer 24 in den Aufnahmen 7, 8, 9, im Fahrzeug montiert werden.

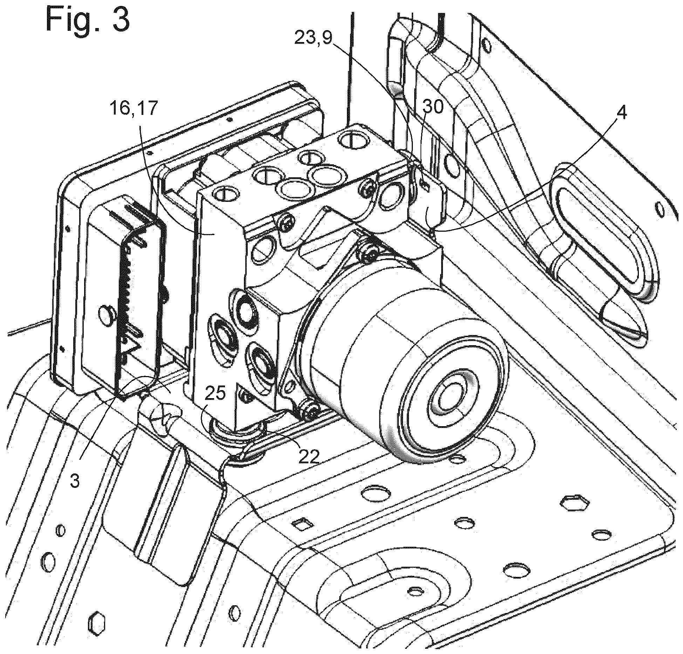

So wird die in Fig. 3 gezeigte Konfiguration erreicht, in der das Modul 16 fest an der Halterung 1 gehalten ist. Von den zwei Kreisscheiben 25 der Puffer 24 in den Aufnahmen 7, 8 sitzt jeweils eine auf der Trägerplatte 3 und eine darunter, so dass das Gehäuse 17 mit der Trägerplatte 3 parallel gegenüberliegender und von ihr durch den verdickten Abschnitt der hier nicht sichtbaren Vorsprünge 22 und die innere Kreisscheibe 25 der Puffer 24 beabstandet gehaltener Oberfläche 20 fixiert ist. Der Puffer 24 am Vorsprung 23 ist in der Aufnahme 9 der Sicherungsplatte 4 verrastet.

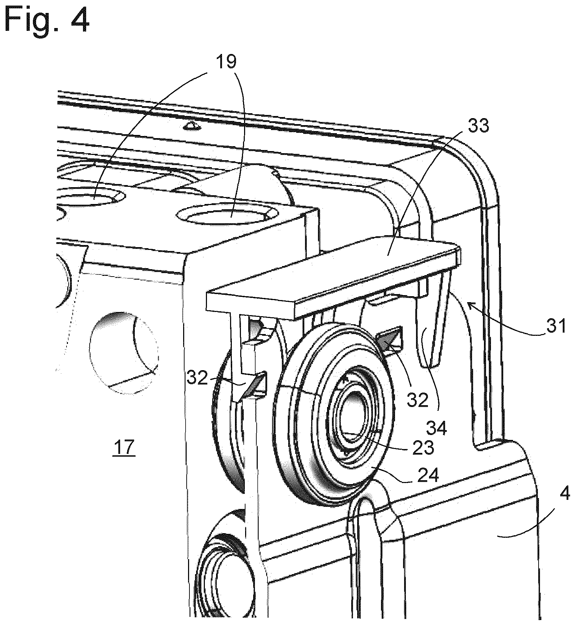

Wie in Fig. 1 gezeigt, sind in der Sicherungsplatte 4 beiderseits der Aufnahme 9 Löcher 30 gebildet. Diese sind vorgesehen, um daran einen Stecker 31 zu verrasten, der den Durchgang 10 versperrt und so ein Entweichen des ESP-Moduls aus der Halterung 1 sicher ausschließt. Fig. 10 zeigt das obere Ende der Sicherungsplatte 4 und den darauf aufgesteckten Stecker 31 teils in perspektivischer Ansicht, teils im Schnitt. Die Schnittebene verläuft durch eines der Löcher 30, um die Verbundung zwischen einem darin eingreifenden Widerhaken 32 und einer Grundplatte 33 des Steckers 31 zeigen zu können. Neben den beiden Widerhaken 32 stehen von der Grundplatte 33 zwei Paare von Klauen 34 nach unten ab, von denen eines in der Darstellung der Fig. 4 weggeschnitten ist. Indem die Klauen 34 die Sicherungsplatte 4 beiderseits umgreifen, halten sie den Stecker 31 kippsicher auf deren oberer Kante.

### Bezugszeichen

1 Halterung
2 Winkelstück
3 Trägerplatte
4 Sicherungsplatte
5 Stützfuß
7 Öffnung
8 Öffnung
9 Öffnung
10 Randöffnung
11 Randsteg
12 Schenkel
13 Schweißlasche
14 Oberfläche
15 Flanke
16 Modul
17 Gehäuse
18 Steckverbinder
19 Ein- / Auslass
20 Oberfläche
21 Oberfläche
22 Vorsprung
23 Vorsprung
24 zylindrischer Abschnitt
25 Kreisscheibe
26 Abschnitt von kleinerem Durchmesser
27 Schaft
28 weiter Bereich
29 enger Bereich
30 Loch
31 Stecker
32 Widerhaken
33 Grundplatte
34 Klaue

## Patentansprüche

1. Teilesatz zur Befestigung eines Gehäuses (17) in einem Fahrzeug, mit einer quer zu einer Einsteckrichtung orientierten Trägerplatte (3), die wenigstens eine Aufnahme (7, 8) aufweist, in die ein Vorsprung des Gehäuses (17) entlang der Einsteckrichtung einsteckbar ist, und einer sich parallel zu der Einsteckrichtung erstreckenden Sicherungsplatte (4), die eine weitere Aufnahme (9) für einen weiteren Vorsprung (23) des Gehäuses aufweist, wobei die weitere Aufnahme (9) über einen Durchgang (10) mit einem Rand der Sicherungsplatte (4) verbunden ist, wobei der Teilesatz einen elastischen Puffer (24) umfasst, der in jeder Aufnahme (7, 8) der Trägerplatte fixierbar ist und einen sich in der Einsteckrichtung erstreckender Durchgang aufweist, um den wenigstens einen Vorsprung aufzunehmen, **dadurch gekennzeichnet, dass** der Puffer (24) einen Abschnitt von kleinerem Durchmesser (26) zwischen zwei Abschnitten von größerem Durchmesser (25) aufweist und jede Aufnahme (7, 8) der Trägerplatte einen weiten Bereich, der bemessen ist, um wenigstens einen der Abschnitte (25) von größerem Durchmesser durchzulassen, und einen engen Bereich, in dem der Abschnitt von kleinerem Durchmesser (26) in der Einsteckrichtung unbeweglich fixierbar ist, umfasst..

2. Teilesatz nach Anspruch 1, ferner mit einem Stecker, der zum Versperren des Durchgangs auf den Rand der Sicherungsplatte (4) aufsteckbar ist.

3. Teilesatz nach Anspruch 1, bei dem die Trägerplatte (3) zwei Aufnahmen (7, 8) umfasst und die engen Bereiche der beiden Aufnahmen (7, 8) gegen deren weite Bereiche in verschiedene Richtungen versetzt sind.

4. Teilesatz nach nach einem der vorhergehenden Ansprüche, bei dem die Sicherungsplatte (4) und die Trägerplatte (3) zu einer Halterung (1) verbunden sind.

5. Teilesatz nach Anspruch 4 bei der Ebenen der Trägerplatte (3) und der Sicherungsplatte (4) einander entlang einer Schnittlinie kreuzen und die Trägerplatte (3) ein quer zu der Schnittlinie langgestrecktes Versteifungsprofil aufweist.

6. Teilesatz nach Anspruch 5 bei der das Versteifungsprofil ein von einem Rand der Trägerplatte (3) abgewinkelter Steg ist.

7. Teilesatz nach Anspruch 5 oder 6, bei der das Versteifungsprofil sich an jeder Aufnahme (7, 8) der Trägerplatte (3) vorbei erstreckt.

8. Teilesatz nach einem der vorhergehenden Ansprüche, bei der wenigstens eine der Aufnahmen (7, 8, 9) durch einen Randsteg (11) begrenzt ist.

9. Teilesatz nach Anspruch 4, bei dem die Halterung (1) wenigstens teilweise aus Stahlblech gefertigt ist.

10. Fahrzeug mit einem durch einen Teilesatz nach einem der vorhergehenden Ansprüche befestigten Modul (16).

## Claims

1. Kit of parts for fastening a housing (17) in a vehicle, with a carrier plate (3) oriented transversely to an insertion direction, which has at least one receptacle (7, 8) into which a projection of the housing (17) can be inserted along the insertion direction, and a securing plate (4) extending parallel to the insertion direction, which has a further receptacle (9) for a further projection (23) of the housing, wherein the further receptacle (9) is connected to an edge of the securing plate (4) via a passage (10), wherein the kit of parts comprises an elastic buffer (24) which can be fixed in each receptacle (7, 8) of the carrier plate and has a passage extending in the insertion direction in order to receive the at least one projection, **characterized in that** the buffer (24) has a section of smaller diameter (26) between two sections of larger diameter (25) and each receptacle (7, 8) of the carrier plate has a wide area which is dimensioned to at least to let one of the sections (25) of larger diameter through, and a narrow area in which the section of smaller diameter (26) can be fixed immovably in the insertion direction.

2. Parts kit according to claim 1, further comprising a plug that can be plugged onto the edge of the locking plate (4) to block the passage.

3. Parts kit according to claim 1, in which the carrier plate (3) comprises two receptacles (7, 8) and the narrow areas of the two receptacles (7, 8) are offset in different directions from their wide areas.

4. Parts kit according to one of the preceding claims, in which the locking plate (4) and the carrier plate (3) are connected to form a holder (1).

5. Parts kit according to claim 4, in which planes of the carrier plate (3) and the locking plate (4) cross each other along a cutting line and the carrier plate (3) has a stiffening profile that is elongated transversely to the cutting line.

6. Parts kit according to claim 5, in which the stiffening profile is a web angled from an edge of the carrier plate (3).

7. Parts kit according to claim 5 or 6, in which the stiffening profile (6) extends past each receptacle (7, 8) of the carrier plate (3).

8. Parts kit according to one of the preceding claims, in which at least one of the receptacles (7, 8, 9) is limited by an edge web (11).

9. Parts kit according to claim 4, in which the holder (1) is at least partially made of sheet steel.

10. Vehicle with a module (16) fastened by a parts kit according to one of the preceding claims.

## Revendications

1. Ensemble de pièces de fixation d'un boîtier (17) dans un véhicule, avec une plaque support (3) orientée transversalement à une direction d'insertion, qui présente au moins un réceptacle (7, 8) dans lequel une saillie du boîtier (17 ) peut être inséré le long de la direction d'insertion, et une plaque de verrouillage (4) s'étendant parallèlement à la direction d'insertion, qui présente un autre logement (9) pour une autre saillie (23) du boîtier, l'autre logement (9) comportant un passage (10) avec un bord de la plaque de verrouillage (4) est relié, l'ensemble de pièces comprenant un tampon élastique (24) qui peut être fixé dans chaque réceptacle (7, 8) de la plaque porteuse et présente un passage s'étendant dans le sens d'insertion pour loger la au moins une saillie, **caractérisé en ce que** le tampon (24) présente une section de plus petit diamètre (26) entre deux sections de plus grand diamètre (25) et chaque réceptacle (7, 8) du la plaque de support présente une zone large qui est dimensionnée pour recevoir au moins l'une des sections (25) de plus grand diamètre à traverser, et une zone étroite dans laquelle la section de plus petit diamètre (26) peut être fixée de manière immobile dans la direction d'insertion.

2. Ensemble de pièces selon la revendication 1, comprenant en outre un bouchon pouvant être enfiché sur le bord de la plaque de fixation (4) pour bloquer le passage.

3. Ensemble de pièces selon la revendication 1, dans lequel la plaque support (3) comprend deux réceptacles (7, 8) et les zones étroites des deux réceptacles (7, 8) sont décalées dans des directions différentes par rapport à leurs zones larges.

4. Ensemble de pièces selon l'une des revendications précédentes, dans lequel la plaque de fixation (4) et la plaque support (3) sont reliées pour former un support (1).

5. Ensemble de pièces selon la revendication 4, dans lequel les plans de la plaque porteuse (3) et de la plaque de fixation (4) se croisent le long d'une ligne de découpe et la plaque porteuse (3) présente un profil de rigidification allongé transversalement au ligne de coupe.

6. Ensemble de pièces selon la revendication 5, dans lequel le profilé raidisseur est une âme coudée à partir d'un bord de la plaque porteuse (3).

7. Ensemble de pièces selon la revendication 5 ou 6, dans lequel le profilé raidisseur (6) s'étend au-delà de chaque réceptacle (7, 8) de la plaque porteuse (3).

8. Ensemble de pièces selon l'une des revendications précédentes, dans lequel au moins un des réceptacles (7, 8, 9) est limité par une âme de bordure (11).

9. Ensemble de pièces selon la revendication 4, dans lequel le support (1) est au moins partiellement réalisé en tôle d'acier.

10. Véhicule avec un module (16) fixé par un ensemble de pièces selon l'une des revendications précédentes.
